# DEMANDE DE BREVET EUROPEEN

(11) **EP 1 236 974 A1**
(43) Date de publication de la demande: **04.09.2002**
(21) Numéro de dépôt: 01810210.3
(22) Date de dépôt: 01.03.2001
(51) Int. Cl.: G01F 1/38, G01F 1/36, G01F 1/40

(54) **Dispositif pour mesurer une pression en deux points d'un écoulement fluidique**

(71) Demandeur: Seyonic SA, 2000 Neuchâtel (CH)
(72) Inventeur: Boillat, Marc, 2012 Auvernier (CH); Van der Schoot, Bart, 2000 Neuchâtel (CH); De Rooij, Nico, 2014 Bôle (CH); Guldimann, Benedikt, 2000 Neuchâtel (CH)
(74) Mandataire: Gresset, Jean

(57) **Abrégé**

Dispositif pour mesurer une pression en deux points d'un écoulement fluidique, comprenant:
- un bâti (10) formé de deux plaques (12, 14) comportant chacune deux faces planes, l'une extérieure (12a, 14a) et l'autre intérieure (12b, 14b), et dans lequel l'une des plaques (12) est percée d'une creusure (22) fermée par l'autre plaque (14) pour former ensemble deux chambres (28, 30) comportant deux parois (24, 14b) planes parallèles aux faces (12a, 14a) du bâti et une paroi latérale (26) formant son pourtour ainsi qu'un canal de restriction fluidique (32) reliant les chambres (28, 30) entre elles, et
- des moyens (16) pour fournir une mesure de la pression dans chacune des chambres (28, 30).

Afin d'améliorer la précision de la mesure, la paroi latérale (26) des chambres (28, 30) est perpendiculaire à ses deux parois planes (24, 14b) et est conformée de manière à ce que les chambres (28, 30) soient fusiformes.

## Description

La présente invention se rapporte aux dispositifs destinés à mesurer une pression en deux points d'un écoulement fluidique. Elle concerne, plus particulièrement, un dispositif du type comprenant:
- un bâti formé de deux plaques comportant chacune deux faces planes, l'une extérieure et l'autre intérieure, les deux faces intérieures étant accolées l'une à l'autre, et dans lequel l'une des plaques est munie d'une creusure fermée par l'autre plaque pour former ensemble deux chambres comportant deux parois planes parallèles aux faces du bâti et une paroi latérale formant son pourtour ainsi qu'un canal de restriction fluidique reliant les chambres entre elles, ledit bâti comportant deux ouvertures reliant respectivement les deux chambres à l'extérieur pour permettre d'y faire circuler un fluide, et
- des moyens pour fournir une mesure de la pression dans chacune des chambres.

Un tel dispositif est, par exemple, décrit dans les publications intitulées "High Precision Piezo-Resistive Sensing Techniques for Micro-Dosing Applications (M. Boillat et al. Proceedings Sensor Expo Cleveland 1999) et "A Differential Pressure Liquid Flow Sensor for Flow Regulation and Dosing Systems" (M. Boillat et al. 0-7803-2503-6 © 1995 IEEE). La plaque munie d'une creusure est en silicium monocristallin (100), la creusure étant réalisée par gravage chimique, tandis que l'autre plaque est en verre. La mesure de pression s'effectue au moyen de deux transducteurs piézorésistifs respectivement disposés sur la face extérieure de la plaque gravée en regard des deux chambres et connectés dans la configuration d'un pont de Wheatstone.

Du fait que la creusure est réalisée par attaque chimique du silicium, elle a une section en forme de trapèze isocèle dont la grande base et les côtés font un angle de 54° environ. De plus, la paroi latérale, définissant un pourtour rectangulaire, est constituée de surfaces planes accolées les unes aux autres.

Avec une telle structure, il peut arriver que, lors du remplissage au moyen d'un liquide, des bulles de gaz restent piégées dans l'une ou l'autre des chambres et affectent considérablement la précision de la mesure à cause de leur élasticité.

Le but de la présente invention est donc de fournir un dispositif permettant d'éviter que de telles bulles restent piégées, et ainsi d'effectuer une mesure de pression offrant une précision et une sécurité de mesure maximales.

De façon plus précise, l'invention concerne un dispositif du type précédemment décrit mais qui, pour atteindre le but exposé ci-dessus, se caractérise en ce que la paroi latérale des deux chambres est conformée de manière à ce que ces dernières soient en forme de fuseau, autrement dit fusiformes.

De façon avantageuse, la paroi latérale des deux chambres est sensiblement perpendiculaire à ses deux parois planes. Par ailleurs, les deux chambres sont alignées selon l'axe longitudinal du bâti et disposées symétriquement par rapport à son axe transversal.

Selon un mode de réalisation préféré, la paroi du fond de la creusure forme une membrane élastiquement déformable sous l'effet de la pression dans chacune des deux chambres et les moyens de mesure comportent deux transducteurs électromécaniques respectivement disposés en regard des chambres, à l'extérieur de la membrane. Dans ce cas, chaque transducteur est avantageusement formé de deux paires de piézorésistances interconnectées de manière à former un pont de Wheatstone et disposées symétriquement par rapport à l'axe longitudinal du bâti, les deux piézorésistances de chaque paire étant disposées symétriquement par rapport à l'axe transversal de la chambre.

Enfin, il est avantageux de doter le dispositif d'un capteur de température disposé sur l'une des plaques au voisinage de l'écoulement fluidique de manière à ce que la température mesurée corresponde à celle du liquide considéré. Il est ainsi possible de déterminer avec précision le débit du liquide.

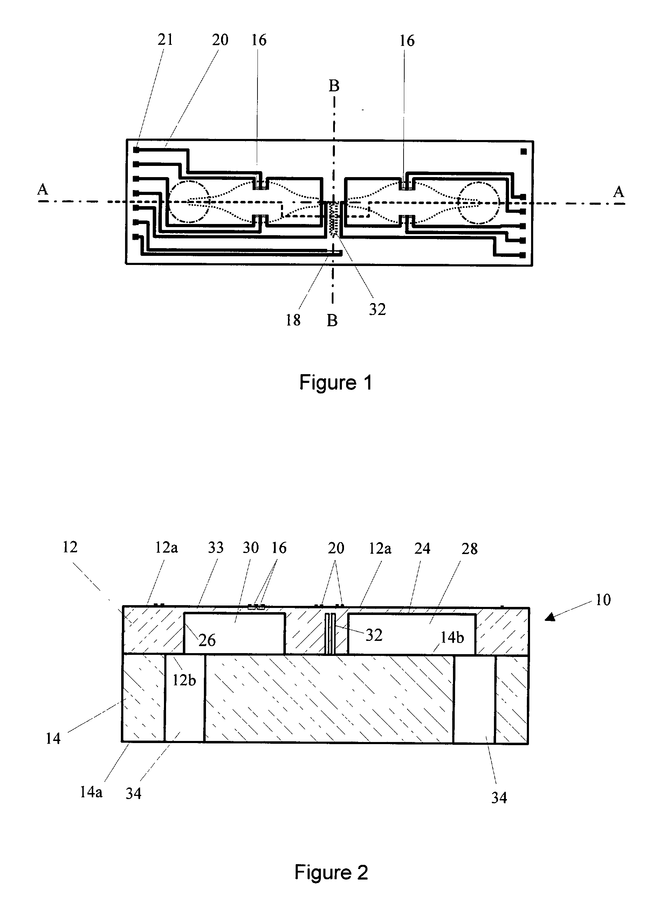

D'autres avantages et caractéristiques de l'invention ressortiront de la description qui va suivre, faite en regard du dessin annexé, dans lequel
- les figures 1 et 2 montrent, respectivement en plan et en coupe, un dispositif selon l'invention, et
- les figures 3 et 4 représentent la plaque de base du dispositif, vue respectivement de dessus et de dessous.

Le dessin représente un dispositif comportant une enveloppe 10 formée d'une plaque de base 12 en silicium monocristallin et d'une lame de verre 14 tenant lieu de couverture. La plaque 12 et la lame 14 comportent chacune deux grandes faces planes, les unes, extérieures, identifiées par la lettre a, les autres, intérieures, identifiées par la lettre b et accolées l'une à l'autre par soudage.

L'enveloppe 10 est de forme générale parallélépipédique, de 10mm de longueur selon un axe longitudinal A-A, 3mm de largeur selon un axe transversal B-B, et 1mm d'épaisseur environ, avec des grandes faces définies respectivement par les faces extérieures 12a de la plaque 12 et 14a de la lame 14, parallèles entre elles et aux faces assemblées 12b et 14b. Les autres faces de l'enveloppe 10 sont formées par les tranches de la plaque 12 et de la lame 14.

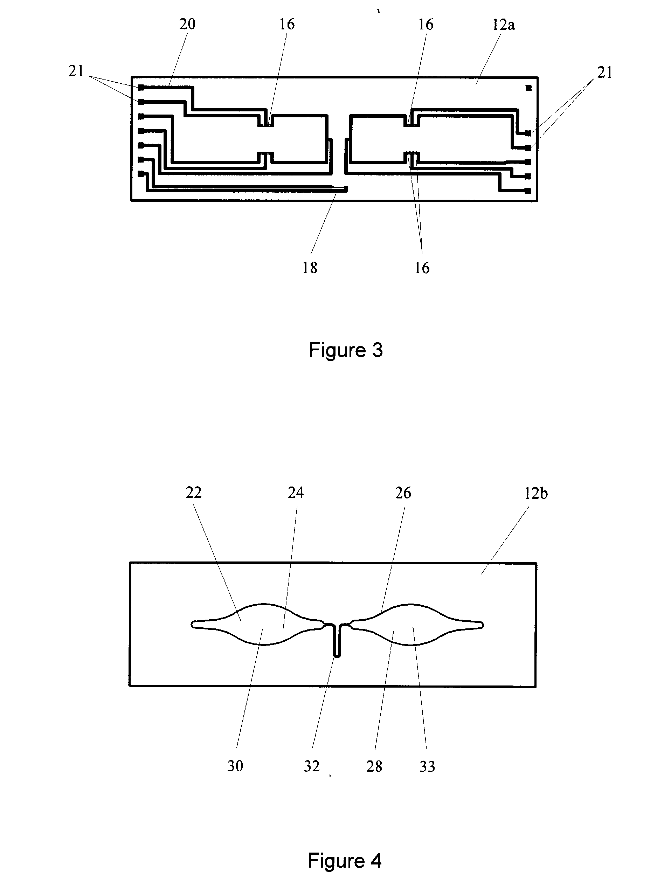

L'enveloppe 10 porte, sur sa face extérieure 12a (figure 3), huit piézorésistances 16 disposées en deux groupes de quatre symétriquement par rapport à l'axe transversal B-B du parallélépipède. Chaque groupe est formé de deux paires de piézorésistances disposées symétriquement par rapport à l'axe longitudinal A-A.

L'enveloppe 10 porte également, sur la face 12a, une thermorésistance 18 disposée sensiblement au milieu de l'un des grands côtés du parallélépipède. Cette thermorésistance sert à mesurer la température du dispositif.

Un réseau de pistes conductrices 20 relie entre elles les quatre piézorésistances 16 de chaque groupe de manière à former deux ponts de Wheatstone constituant deux transducteurs dont la fonction apparaîtra plus loin. Ces pistes assurent également la liaison électrique des deux ponts, ainsi que celle de la thermorésistance 18, à des bornes 21 disposées aux deux extrémités de la face 12a.

Comme le montre la figure 4, la face 12b de la plaque 12, destinée à être accolée à la plaque 14, présente une creusure 22 dont le fond 24 est parallèle aux faces 12a et 14a, et dont la paroi 26, sensiblement perpendiculaire au fond 24, est conformée de manière à constituer, avec la face 14b de la plaque 14, deux chambres fusiformes, l'une d'entrée 28, l'autre de sortie 30, alignées selon l'axe longitudinal A-A du dispositif et disposées symétriquement par rapport à son axe transversal B-B de manière à ce que la partie médiane de chacune se trouve en regard des quatre piézorésistances 16 de chaque groupe. On notera que les deux piézorésistances de chaque paire sont disposées symétriquement par rapport à l'axe transversal de la chambre, parallèle à l'axe B-B.

Les deux chambres 28 et 30 communiquent entre elles par un canal 32 ménagé dans la plaque 12 pour former une restriction fluidique en forme de U. La thermorésistance 18 se trouve au voisinage immédiat du canal 32, de telle sorte que la température de la plaque à cet endroit correspond parfaitement à celle du liquide contenu dans ce canal.

Dans sa partie comprise entre la paroi 12a et le fond 24, la plaque 12 a une épaisseur suffisamment faible, typiquement de 15µm, pour former une membrane 33 élastiquement déformable. C'est sur cette membrane que sont disposées les piézorésistances 16, de sorte qu'une différence de pression entre les deux chambres 28 et 30 peut être mesurée au moyen des transducteurs électromécaniques que constituent les deux ponts de Wheatstone.

Deux trous cylindriques 34, pratiqués dans la lame 14 et orientés perpendiculairement à la plaque 12, forment des ouvertures permettant de relier respectivement les chambres 28 et 30 à l'extérieur de l'enveloppe 10. Ces trous débouchent dans les chambres à leurs extrémités opposées à la restriction fluidique 32.

Dans le dispositif décrit, le liquide entre dans l'un des trous 34 et ressort par l'autre, après avoir transité par la chambre 28, la restriction fluidique 32 et la chambre 30.

La fabrication d'un tel dispositif se fait à partir de plaques de silicium monocristallin, communément appelées du terme anglais "wafer", telles qu'utilisées pour la production de circuits intégrés. Plusieurs dizaines de dispositifs peuvent être fabriqués simultanément sur chacune de ces plaques.

La première étape du procédé consiste à réaliser, sur l'une des faces du "wafer", les piézorésistances 16, la thermorésistance 18, les pistes conductrices 20 et les bornes 21, au moyen des techniques utilisées, de manière classique, dans la fabrication des circuits intégrés, par exemple comme décrit dans l'ouvrage intitulé "Silicon sensors" de S. Middelhoek et al. (ISBN 0-12-495051-5).

Le "wafer" est ensuite retourné pour creuser les chambres 28 et 30 ansi que la restriction fluidique 32. Cette opération peut, avantageusement, être réalisée par usinage par plasma profond, plus connu sous l'abréviation DRIE, de l'anglais "Deep Reactive Ion Etching". Cette technique, décrite par P.-A. Clerc et al. dans J. Micromech. Microeng. 8(1998) 272-278, permet de réaliser des logements ayant une profondeur pouvant aller jusqu'à 500 µm. Elle permet aussi de créer une restriction fluidique 32 ayant une largeur de 50 µm. Il est, de la sorte, possible d'obtenir un faible rapport entre la section de la restriction 32 et celui des chambres 28 et 30, ce qui améliore la précision de mesure. Cette technique permet, en outre, d'obtenir des parois faisant avec les faces un angle supérieur à 85°, soit sensiblement perpendiculaires.

La plaque 12 et la lame 14 sont ensuite préparées pour être assemblées par soudure anodique. La manière de réaliser un tel assemblage est décrit dans l'ouvrage intitulé "Process development for 3D silicon microstructures" de Eric Peeters (Université catholique de Louvain). Lorsque cette opération est effectuée, le wafer est scié de manière à séparer les dispositifs les uns des autres.

Le dispositif tel que décrit permet de mesurer, non seulement une différence de pression et une température, mais aussi un débit. En effet, comme précisé dans la publication de M. A. Boillat et al. mentionnée plus haut, le débit dans un conduit calibré est une fonction des dimensions géométriques de ce conduit, de la différence de pression et de la viscosité du liquide. Ainsi, pour un liquide donné, il est possible de déterminer, à partir des informations recueillies au moyen de la thermorésistance, la viscosité du liquide, celle-ci ne variant qu'en fonction de la température. La transmission des informations relatives à la température et à la différence de pression entre les deux chambres vers une électronique de mesure permet donc de définir le débit du liquide considéré.

Le dispositif décrit, avec une restriction 32 ayant une longueur de 10 mm, une largeur de 50 µm et une hauteur de 150 µm, permet de mesurer des débits pouvant atteindre 10 µl/s, tout en restant en régime laminaire. Il va de soit que ces caractéristiques peuvent varier de manière importante. Elles sont choisies en fonction du liquide considéré et de son débit.

Ainsi, la précision peut être améliorée en augmentant la longueur de la restriction ou en réduisant la section. Il en résulte une augmentation de la résistance à l'écoulement, ce qui nécessite une pression plus élevée, pour obtenir un même écoulement. Le débit maximum admissible est alors réduit.

## Revendications

1. Dispositif pour mesurer une pression en deux points d'un écoulement fluidique, comprenant:
- un bâti (10) formé de deux plaques (12, 14) comportant chacune deux faces planes, l'une extérieure (12a, 14a) et l'autre intérieure (12b, 14b), les deux faces intérieures (12b, 14b) étant accolées l'une à l'autre, et dans lequel l'une des plaques (12) est munie d'une creusure (22) fermée par l'autre plaque (14) pour former ensemble deux chambres (28, 30) comportant deux parois (24, 14b) planes parallèles aux faces (12a, 14a) du bâti et une paroi latérale (26) formant son pourtour ainsi qu'un canal de restriction fluidique (32) reliant les chambres (28, 30) entre elles, ledit bâti (10) comportant deux ouvertures (34) reliant respectivement les deux chambres (28, 30) à l'extérieur pour permettre d'y faire circuler un fluide, et
- des moyens (16) pour fournir une mesure de la pression dans chacune desdites chambres (28, 30),
**caractérisé en ce que** la paroi latérale (26) des deux chambres (28, 30) est conformée de manière à ce qu'elles soient fusiformes.

2. Dispositif selon la revendication 1, **caractérisé en ce que** la paroi latérale (26) des deux chambres (28, 30) est sensiblement perpendiculaire à ses deux parois planes (24, 14b).

3. Dispositif selon la revendication 1, **caractérisé en ce que** les deux chambres (28, 30) sont alignées selon l'axe longitudinal (A-A) du bâti (10) et disposées symétriquement par rapport à son axe transversal (B-B).

4. Dispositif selon la revendication 1, **caractérisé en ce que** la paroi du fond de la creusure (22) forme une membrane (33) élastiquement déformable sous l'effet de la pression dans chacune des deux chambres (28, 30) et **en ce que** lesdits moyens comportent deux transducteurs électromécaniques respectivement disposés en regard desdites chambres, à l'extérieur de ladite membrane.

5. Dispositif selon la revendication 4, **caractérisé en ce que** chaque transducteur est formé de deux paires de piézorésistances (16) interconnectées de manière à former un pont de Wheatstone et disposées symétriquement par rapport à l'axe longitudinal (A-A) du bâti, les deux piézorésistances de chaque paire étant disposées symétriquement par rapport à l'axe transversal de la chambre.

6. Dispositif selon la revendication 1, **caractérisé en ce qu'**il comporte, en outre, un capteur de température (18) disposé sur l'une desdites plaques, en regard dudit canal (32).
